# EUROPÄISCHE PATENTANMELDUNG

(11) **EP 4 621 004 A1**
(43) Veröffentlichungstag der Anmeldung: **24.09.2025**
(21) Anmeldenummer: 24164045.7
(22) Anmeldetag: 18.03.2024
(51) Int. Cl.: C08J 11/14, D01G 11/00

(54) **VERFAHREN ZUR WIEDERGEWINNUNG VON FASERN AUS FASERVERSTÄRKTEN POLYURETHAN-BASIERTEN VERBUNDWERKSTOFFEN**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Die vorliegende Erfindung betrifft ein Verfahren zur Wiedergewinnung von Fasern aus faserverstärkten Polyurethan-basierten Verbundwerkstoffen mit Hilfe eines Hydrolyseverfahrens und die weitere Verwendung der so wiedergewonnen Fasern.

## Beschreibung

Die vorliegende Erfindung betrifft ein Verfahren zur Wiedergewinnung von Fasern aus faserverstärkten Polyurethan-basierten Verbundwerkstoffen mit Hilfe eines Hydrolyseverfahrens und die weitere Verwendung der so wiedergewonnen Fasern.

Methoden des chemischen Recyclings (Chemolyse) von Polyurethanmaterialien und Vorrichtungen zu deren Durchführung waren bereits häufig Gegenstand der Literatur, insbesondere auch der Patentliteratur. Mögliche Routen gehen über die Hydrolyse der Urethanbindungen durch Umsetzung mit Wasser unter Gewinnung von Aminen und Polyolen unter Bildung von Kohlenstoffdioxid oder die Hydroglykolyse von Urethanbindungen durch Umsetzung mit Alkoholen und Wasser.

Polyurethan-basierte Verbundwerkstoffe finden vielfältige Einsatzmöglichkeiten, beispielsweise in der Automobilindustrie oder für die Herstellung von Windgeneratorblättern. In diesen Anwendungen werden neben den für die Polyurethanherstellung üblicherweise eingesetzten Polyolen und Polyisocyanaten auch häufig noch weitere, radikalisch vernetzende Monomere, z.B. Acrylat - oder Vinylmonomere eingesetzt. Aus dem europäischen Patent EP 3 129 422 B1 ist bekannt, dass faserverstärkter Polyurethan-Poly(meth)acrylat-Verbundwerkstoff zur Herstellung von Produkten verwendet werden kann, wie z.B. Windgeneratorblätter, Windgeneratorgondelgehäuse, Propellerblätter von Wasserfahrzeugen, Rümpfe, Innen- und Außenverkleidungen von Kraftfahrzeugen, Automobilkarosserien, Radome, Maschinenstrukturbauteile, dekorative Teile und Strukturbauteile für Architekturen und Brücken. Um die Eigenschaften der oben genannten Produkte zu erfüllen, bietet dieser Verbundwerkstoff eine gute mechanische Festigkeit und Witterungsbeständigkeit.

Bisher wurde jedoch in der Chemolyse noch nicht der Fokus auf die Wiedergewinnung von Fasern aus Polyurethan-basierten Verbundwerkstoffen gelegt, so dass es bisher noch an geeigneten Bedingungen fehlt, mit denen sich die Fasern in sehr guter Qualität zurückgewinnen lassen, welche einen wiederholten Einsatz in den gleichen oder ähnlichen Anwendungsfeldern zulassen und / oder welche sich aufgrund ihrer hohen Reinheit zur Herstellung von neuen Fasern durch Einschmelzen nutzen lassen.

So befassen sich die Veröffentlichungen betreffend die Chemolyse im Wesentlichen mit den gewinnbaren organischen Rohstoffen umfassend die Polyole bzw. die in der Chemolyse gebildeten Umsetzungsprodukten derselben und, durch hydrolytische Spaltung der Urethanbindung, Amine. So gewonnene Amine lassen sich nach Aufarbeitung wieder zu Isocyanaten phosgenieren.

US 3,444,616 beschreibt die Gewinnung von Polyetherpolyolen durch Hydrolyse von Polyurethanen bei Temperaturen von 100 - 190 °C mit einer DMSO / Wassermischung in Gegenwart von basischen Alkali- oder Erdalkaliverbindungen.

EP 0 011 662 A1 beschreibt die Hydrolyse von Polyurethanen, insbesondere Polyurethanweichschäumen, mit überhitztem Wasserdampf, bei Temperaturen von 150 -275 °C und Drücken zwischen 0,4 und 5,0 atm, ebenfalls in Gegenwart von basischen Alkali- oder Erdalkaliverbindungen.

EP 0 976 719 A1 beschreibt eine Vorrichtung und ein Verfahren zur Hydrolyse von Polyisocyanatderivaten, bei dem das zu spaltende Polyisocyanatderivat mit Wasser einer Temperatur von 190 bis 370 °C bei einem solchen Druck umgesetzt wird, dass das Wasser flüssig vorliegt. Die Hydrolyse wird ohne Einsatz eines Katalysators durchgeführt. Das Verfahren wird in den Beispielen anhand der Hydrolyse eines Polyurethanweichschaums, eines Polyurethanhartschaums und eines Rückstands aus der Produktion von Toluylendiisocyanat (TDI) demonstriert.

WO 2022/042909 A1 beschreibt ein Verfahren zur Hydrolyse von Polyurethanen in Gegenwart einer Base aufweisend ein Alkalimetall-Kation und/oder ein Ammonium-Kation, wobei die Base einen pKB-Wert bei 25 °C von 1 bis 10 hat, und wobei zusätzlich ein (Phasentransfer-)Katalysator ausgewählt aus der Gruppe bestehend aus (i) einem quartären Ammoniumsalz enthaltend ein Ammonium-Kation umfassend 6 bis 30 Kohlenstoffatome und (ii) ein organisches Sulfonat enthaltend wenigstens 7 Kohlenstoffatome eingesetzt wird. Die Hydrolyse liefert Polyetherpolyole und Polyamine. Die Wiederverwertung von PIR-haltigen Polyurethanen wird nicht beschrieben. Eine Hydrolyse von Polyetherpolyol-basierten Polyurethanen in Gegenwart starker Basen wie den Oxiden und Hydroxiden der Alkali- und Erdalkalimetalle und eines Aktivierungsmittels ausgewählt aus quartären Ammoniumsalzen mit mindestens 15 Kohlenstoffatomen oder organischen Sulfonaten mit mindestens 7 Kohlenstoffatomen wurde bereits in US 5,208,379 beschrieben.

WO 2022/042910 A beschreibt ein Verfahren zur Hydrolyse von Polyurethanen in Gegenwart einer Base aufweisend ein Alkalimetall-Kation und/oder ein Ammonium-Kation, wobei die Base einen pKB-Wert bei 25 °C von unter 1 hat, und wobei zusätzlich ein (Phasentransfer-)Katalysator ausgewählt aus der Gruppe bestehend aus (i) einem quartären Ammoniumsalz enthaltend ein Ammonium-Kation mit 6 bis 14 Kohlenstoffatomen, sofern das Ammonium-Kation keinen Benzylrest umfasst, und (ii) einem quartäres Ammoniumsalz enthaltend ein Ammonium-Kation mit 6 bis 12 Kohlenstoffatomen, sofern das Ammonium-Kation einen Benzylrest umfasst, eingesetzt wird. Die Hydrolyse liefert Polyetherpolyole und Polyamine.

WO 2023/208926 A offenbart ein Verfahren zur Wiedergewinnung von Rohstoffen aus Isocyanurat-haltigen Polyurethanprodukten, umfassend die Schritte:
(A) Bereitstellen eines auf einer Isocyanatkomponente und einer Polyolkomponente basierenden Isocyanurat-haltigen Polyurethanprodukts;
(B) Chemolyse des Isocyanurat-haltigen Polyurethanprodukts mit flüssigem Wasser in Abwesenheit eines organischen Lösungsmittels oder in Gegenwart eines gegenüber Urethangruppen und Isocyanuratgruppen inerten organischen Lösungsmittels
bei einer Temperatur im Bereich von 130 °C bis 260 °C und bei einem Druck im Bereich von 1,0 bar bis 100 bar, in Gegenwart eines Katalysators. Es werden in den Beispielen hohe Mengen an alkalischen Katalysatoren eingesetzt.

Keines der zuvor genannten Verfahren ist jedoch zufriedenstellend betreffend die Wiedergewinnung der Fasern aus einem faserhaltigen Polyurethan-basierten Verbundwerkstoff, denn unter den bisher bekannten Bedingungen werden die Fasern entweder zerstört oder haben nicht die ausreichende Qualität, dass diese ohne großen Aufwand wieder in Faseranwendungen, wie z.B. Verbundwerkstoffen, oder für die Herstellung von neuen Fasern eingesetzt werden können.

Diesem Bedarf Rechnung tragend ist Gegenstand der vorliegenden Erfindung ein
Verfahren zur Wiedergewinnung von Fasern aus einem faserverstärkten Polyurethan - basierten Verbundwerkstoff, umfassend die Schritte:
(A) Vorlegen einer Reaktionsmischung enthaltend einen Verbundwerkstoff aus einem Polyurethanharz und Fasern ("faserverstärkter Polyurethan-basierter Verbundwerkstoff"), Wasser und einem Katalysator ausgewählt ist aus der Gruppe enthaltend Hydroxide, Carbonate, Hydrogencarbonate, Phosphate, Hydrogenphosphate, Carboxylate und Alkoholate von Alkali - oder Erdalkalimetallen sowie Mischungen dieser Verbindungen,
(B) Hydrolyse der Reaktionsmischung unter Auflösung des Polyurethanharzes,
(C) Abtrennung der Fasern durch Filtration und Waschung,
dadurch gekennzeichnet, dass
der Katalysator in einer Menge von 3 - 50 mmol / g, bevorzugt in einer Menge von 5 - 40 mmol / g, insbesondere bevorzugt von 7 - 20 mmol / g bezogen auf die Menge an eingesetztem Polyurethanharz (Verbundwerkstoff ohne Faser) eingesetzt wird, und
die Hydrolyse für > 150 min, bevorzugt > 200 min und besonders bevorzugt in einem Bereich von > 220 min und < 480 min, und
bei einer Temperatur im Bereich von 205°C bis 245°C, bevorzugt von 205 °C bis 235 °C, besonders bevorzugt von 210 °C bis 235 °C und noch mehr bevorzugt von 215 - 225 °C, durchgeführt wird.

Ein weiterer Aspekt der Erfindung ist es, aus dem faserverstärkten Polyurethan - basierten Verbundwerkstoff Fasern zurückzugewinnen, die als Rezyklat genügend Stabilität und mechanische Festigkeit aufweisen, um als Fasern in faserverstärkten Materialien oder für die Herstellung von Fasermatten wiederverwendet zu werden und/oder welche sich aufgrund ihrer hohen Reinheit zur Herstellung von neuen Fasern durch Einschmelzen nutzen lassen. Beispiele für faserverstärkte Materialien, in denen die rezyklierten Fasern eingesetzt werden können, sind insbesondere Verbundwerkstoffe mit niedrigen mechanischen Anforderungen, wie z.B. nicht strukturelle Bauteile und Verschleißteile im Automobil- und Bausektor.

Bei den Polyurethan-basierten Verbundwerkstoffen im Sinne dieser Anmeldung handelt es sich um faserverstärkte Verbundwerkstoffe, bei denen die Polymermatrix Urethan-bindungen aufweist.

Beispiele hierfür sind Polyurethane hergestellt durch Umsetzung von aromatischen und / oder aliphatischen Polyisocyanaten mit Polyolen, insbesondere Polyester- und / oder Polyetherpolyolen und Polyurethan-Poly(meth)acrylate, bei denen Polyole, Isocyanate und (Meth)acrylmonomere gleichzeitig oder konsekutiv miteinander umgesetzt und vernetzt werden. Im Folgenden werden alle Polymere, die hydrolysierbare Urethanbindungen aufweisen, mit "Polyurethan-basierte" Polymere bezeichnet.

Der Begriff "Kennzahl" bedeutet das mit 100 multiplizierte molare Verhältnis von NCO-Gruppen zu NCO-reaktiven Gruppen einer Rezeptur.

Der Begriff "(Meth)acrylat" bedeutet eine Gruppe von Verbindungen, bestehend aus Acrylsäure und ihren Derivaten, Methacrylsäure und deren Derivaten.

Der Ausdruck "Poly(meth)acrylat" bedeutet eine Gruppe polymerer oder copolymerer Verbindungen, hergestellt aus mindestens einem oder mehreren (Meth)acrylatmonomer.

Für die Zwecke dieser Anmeldung wird der Begriff "Polyisocyanat" für eine organische Verbindung verwendet, die zwei oder mehr Isocyanatgruppen (-N=C=O) enthält.

Das hier vorgestellte hydrolytische Verfahren eignet sich insbesondere für faserverstärkte Verbundwerkstoffe aus Polyurethan-basierten Polymeren, welche hinsichtlich der Isocyanatkomponente auf einem Isocyanat ausgewählt aus der Gruppe bestehend aus Methylendiphenylendiisocyanat ("monomeres MDI"; mMDI), Polymethylenpolyphenylenpolyisocyanat ("polymeres MDI; pMDI) und einer Mischung aus Methylendiphenylendiisocyanat und Polymethylenpolyphenylenpolyisocyanat (fortan summarisch als MDI bezeichnet) basieren. Diese werden hergestellt durch Phosgenierung der korrespondierenden Amine (Methylendiphenylendiamin ["monomeres MDA"; mMDA], Polymethylenpolyphenylen-polyamin ("polymeres MDA; pMDA)) oder eine Mischung aus Methylendiphenylendiamin und Polymethylenpolyphenylenpolyamin [fortan summarisch als MDA bezeichnet]).

Hinsichtlich der Polyolkomponente in den Polyurethan-basierten Polymeren sind Polyole ausgewählt aus Polyetherpolyolen, Polyesterpolyolen, Polyetherester-Polyolen, Polyethercarbonatpolyolen oder einer Mischung aus zwei oder mehr der vorgenannten Polyole basieren.

In einer Ausführungsform handelt es sich bei dem Polyurethan-basierten Polymer um ein Polyurethan-Poly(meth)acrylat und es werden in dem erfindungsgemäßen Verfahren Polyurethan-Poly(meth)acrylat-Verbundwerkstoffe eingesetzt, welche neben der Isocyanatkomponente, der Polyolkomponente auch noch eine (Meth)acrylatkomponente enthält. Die (Meth)acrylat-Komponente wird bevorzugt über den Einsatz von hydroxyl- oder isocyanat-funktionalisierten (Meth)acrylatmonomeren und / oder - oligomeren erhalten. Durch radikalische Vernetzung der (Meth)acrylatfunktionen erhält der Verbundwerkstoff zusätzliche Stabilität.

Besonders bevorzugt handelt es sich bei der Polymermatrix um Polyurethane und / oder Polyurethan-Poly(meth)acrylate hergestellt mit einer Kennzahl von 80 - 150, insbesondere bevorzugt von 80 - 120, so dass nur eine geringe Menge an Isocyanurat-Funktionen in dem Material vorhanden sind.

Insbesondere handelt es sich bei der Polymermatrix um ein nicht geschäumtes Material.

Bei den Fasern in dem faserverstärkten Polyurethan-basierten Verbundwerkstoff, welcher in dem erfindungsgemäßen Verfahren eingesetzt werden kann, handelt es sich beispielsweise um Glasfasern, Kohlenstofffasern (Carbonfasern), Kohlenstoffnanoröhren, Polyesterfasern, Naturfasern, Aramidfasern, Nylonfasern, Basaltfasern, Borfasern, Siliciumcarbidfasern, Asbestfasern, Whiskern, Hartpartikeln, Metallfasern oder Kombinationen davon. Bevorzugt werden Glasfasern oder Carbonfasern eingesetzt, ganz besonders bevorzugt Glasfasern.

In einer Ausführungsform enthält der faserverstärkte Polyurethan-basierte Verbundwerkstoff die Fasern in einer Menge von 20 - 95 Gew.-%, bevorzugt 30-85 Gew.-%, und insbesondere von 50-80 Gew.-%, bezogen auf das Gesamtgewicht des faserverstärkten Materials.

Der faserverstärkte Polyurethan-basierte Verbundwerkstoff kann Teil von End-of-Life-Produkten sein, die aus Windgeneratorblättern, Windgeneratorgondelgehäusen, Propellerblättern von Wasserfahrzeugen, Rümpfen, dekorativen Teilen für den Innen- und Außenbereich von Automobilen, Automobilkarosserien, Radomen, Maschinenstrukturteilen, dekorativen Teilen und Strukturelementen für Architekturen und Brücken ausgewählt werden.

In einer besonderen Ausführungsform handelt es sich bei dem Verbundwerkstoff um ein End-of-Life-Produkt, welches aus Windgeneratorblättern ausgewählt ist, und bei welchen es sich um Glas- oder Carbon- faserverstärkte Verbundwerkstoffe aus Polyurethanharz bzw. Polyurethan-Polyacrylat-Hybridharz auf Basis MDI und Polyetherpolyolen mit einer Kennzahl von 80 - 120 handelt.

### SCHRITT (A) - VORBEREITUNG

In Schritt (A) des erfindungsgemäßen Verfahrens wird der faserverstärkte Polyurethan-basierte Verbundwerkstoff bereitgestellt.

Bevorzugt umfasst Schritt (A) vorbereitende Schritte für die Spaltung der Urethanbindungen und Isocyanuratbindungen in Schritt (B). Dabei handelt es sich insbesondere um ein mechanisches Zerkleinern der Polyurethan-basierten Verbundwerkstoffe. Solche vorbereitenden Schritte sind dem Fachmann bekannt. Welche Dimensionen der Verbundwerkstoff nach der Zerkleinerung aufweisen soll, ist einerseits abhängig von Reaktortyp bzw. Reaktorgröße und andererseits auch davon, wie die aufgereinigten Fasern nach der Chemolyse wiederverwendet werden sollen. Für einen Einsatz als rezyklierte Faser sollten die Stücke eher groß sein, um die Faser möglichst wenig mechanisch zu zerstören. Sollen die Faserstücke nach der Chemolyse eingeschmolzen werden, bietet sich ein Zermahlen bis zum Pulver an.

Es ist möglich, in einem Extraktionsschritt die nicht in die Polymermatrix eingebundenen Additive und Hilfsstoffe aus den Ausgangsmaterialien zu entfernen, bevor mit dem chemischen Recycling in Schritt (B) begonnen wird. Hierzu wird der, bevorzugt bereits zerkleinerte, Verbundwerkstoff mit einem organischen Lösungsmittel extrahiert, das bei der Extraktion nicht mit Urethangruppen oder Isocyanuratgruppen reagiert. Dies wird sichergestellt, indem entweder ein Lösungsmittel verwendet wird, das gegenüber Urethangruppen und Isocyanuratgruppen grundsätzlich chemisch inert ist (bevorzugt), oder indem die Temperatur und/oder die Extraktionsdauer so gering gewählt werden, dass noch keine chemische Reaktion in signifikantem Ausmaß stattfindet. Als organische Lösungsmittel haben sich insbesondere aromatische Kohlenwasserstoffe (insbesondere Toluol), Halogenaromaten (insbesondere Monochlorbenzol oder [bevorzugt: ortho-]Dichlorbenzol, wobei Dichlorbenzol, vorzugsweise eingesetzt als ortho-Isomer, stärker bevorzugt ist als Monochlorbenzol), aliphatische Ether (insbesondere Tetrahydrofuran oder [bevorzugt: 1,4 ]Dioxan), Ketone (insbesondere Aceton), aromatische Ether (insbesondere Anisol) oder eine Mischung aus zwei oder mehr der vorgenannten Lösungsmittel bewährt. Halogenaromaten sind dabei bevorzugt. Geeignete Temperaturen für die Extraktion liegen beispielsweise im Bereich von Umgebungstemperatur (Raumtemperatur, insbesondere 20 °C) bis 180 °C, bevorzugt im Bereich von 50 °C bis 180 °C. Die Extraktion kann insbesondere bei Umgebungsdruck und der Siedetemperatur des gewählten organischen Lösungsmittels durchgeführt werden. Nach erfolgter Extraktion wird der zu recyclierende Verbundwerkstoff durch fest-flüssig-Trennung, insbesondere Filtration, vom Extraktionslösungsmittel getrennt und vorzugsweise gewaschen, insbesondere mit einem der vorgenannten organischen Lösungsmittel (es kann, muss jedoch nicht, das gleiche Lösungsmittel wie bei der Extraktion eingesetzt werden). Anhaftende Lösungsmittelreste werden vorzugsweise vor Durchführung von Schritt (B) durch Trocknung entfernt. In der weniger bevorzugten Ausführungsform unter Einsatz von reaktiven Lösungsmitteln (z. B. Alkoholen) für die Extraktion und/oder Wäsche ist eine Entfernung derselben vor Schritt (B) jedoch vorgesehen.

### SCHRITT (B) - HYDROLYSE

Schritt (B) umfasst die Rückgewinnung der Faser aus dem Verbundwerkstoff mittels Chemolyse der Polyurethan - Polymermatrix mit flüssigem Wasser.

Es hat sich gezeigt, dass die Einhaltung ganz bestimmter Bedingungen notwendig ist, um die Faser in einer Qualität zu erhalten, die die Wiederverwertung erlaubt.

Erfindungsgemäß erfolgt diese Hydrolyse in einem Temperaturbereich von 205 °C bis 245 °C, bevorzugt von 205 °C bis 235 °C, insbesondere von 210 °C bis 230 °C und besonders bevorzugt von 215 °C bis 225 °C und bei einem Druck im Bereich von 1,0 bar bis 100 bar, bevorzugt 5,0 bar bis 60 bar, besonders bevorzugt 20 bar bis 50 bar, in Gegenwart eines Katalysators in einer Menge von 3 - 50 mmol / g, bevorzugt 5 - 40 mmol / g, insbesondere bevorzugt 7 - 20 mmol / g bezogen auf die Menge an eingesetztem Polymer (Verbundwerkstoff ohne Faser) ausgewählt aus Phosphaten, Carbonaten und Hydroxiden der Alkali -und Erdalkalimetalle sowie Mischungen dieser Verbindungen.

Hinsichtlich der einsetzbaren Apparaturen sind grundsätzlich alle in der Fachwelt geläufigen Reaktortypen oder deren Kombinationen geeignet. Die Hydrolyse wird bevorzugt in einem Druckreaktor bei autogenem Druck (ohne Druckausgleich) durchgeführt.

Die Hydrolyse wird also derart durchgeführt, dass man den in Schritt (A) bereitgestellten faserhaltigen Polyurethan-basierten Verbundwerkstoff in Schritt (B) in einer geeigneten Apparatur mit dem Wasser in Abwesenheit eines organischen Lösungsmittels vorlegt,
und für > 150 min, bevorzugt > 200 min., insbesondere bevorzugt > 220 min auf eine Temperatur im Bereich von 205 °C bis 245°C, bevorzugt von 205 °C bis 235 °C, besonders bevorzugt von 210 °C bis 230 °C, erhitzt.

In einer bevorzugten Ausführungsform des Verfahrens wird die Hydrolyse bei einer Temperatur im Bereich von 205 °C bis 235 °C, besonders bevorzugt von 210 °C bis 230 °C, ganz besonders bevorzugt von 215 °C bis 225 °C für > 200 min, insbesondere bevorzugt > 220 min durchgeführt.

In einer anderen bevorzugten Ausführungsform des Verfahrens wird die Hydrolyse für > 150 min. und < 360 min bei 235 °C bis 245 °C durchgeführt.

Bevorzugt eingesetzt werden Kaliumphosphat, Natriumcarbonat, Kaliumhydroxid und / oder Natriumhydroxid, ganz besonders bevorzugt Kaliumphosphat.

Die Hydrolyse erfolgt bevorzugt in Abwesenheit von einer oder mehreren Verbindungen ausgewählt aus (i) quartäre Ammoniumsalze enthaltend ein Ammonium-Kation umfassend 6 oder mehr Kohlenstoffatome, (ii) organische Sulfonate umfassend 7 oder mehr Kohlenstoffatome.

Obwohl die Hydrolyse von Polyurethanharzen ohne Fasern allgemein einen breiten Bereich an Reaktionsbedingungen toleriert, ist es überraschenderweise notwendig, diese speziellen Bedingungen einzustellen, um eine wiederverwertbare Faser in guter Qualität (nicht brüchig, mit geringem Gewichtsverlust und mit nur geringen Polymeranhaftungen) zu erhalten.

### SCHRITT (C): ABTRENNUNG UND REINIGUNG DER FASERN

Schritt (C) umfasst die Abtrennung der Fasern durch Filtration des Hydrolyseprodukts, Waschung und Trocknung.

Die Waschung kann mit Wasser und / oder einem organischen Lösungsmittel erfolgen. Bevorzugt erfolgt die Waschung mit Wasser und / oder Aceton.

Nach Abtrennung der Fasern kann auch das filtrierte Hydrolyseprodukt der Polymermatrix aufgearbeitet werden. Diese Aufarbeitung, insbesondere die Rückgewinnung der Amine, kann analog den dem Fachmann aus dem Stand der Technik bereits bekannten Verfahren erfolgen.

Das erfindungsgemäße Verfahren liefert Fasern in guter Faserqualität mit nur geringen Polymeranhaftungen, die sich ohne weitere Aufarbeitung zur Wiederverwendung in glasfaserverstärkten Kunststoffen eignen und / oder welche sich aufgrund ihrer hohen Reinheit zur Herstellung von neuen Fasern durch Einschmelzen nutzen lassen.

### BEISPIELE

### Verwendete Materialien

VBW: Glasfaser-verstärkter Verbundwerkstoff (enthaltend 75 Gew.-% Glasfaser) und 25 Gew.-% eines Polyetherpolyurethan / Polyacrylat - Hybridpolymers, Covestro Deutschland AG
VBW': Glasfaser-verstärkter Verbundwerkstoff (enthaltend 75 Gew.-% Glasfaser) und 25 Gew.-% eines Polyetherpolyurethanharzes, Covestro Deutschland AG

| | |
|---|---|
| NaOH | Natriumhydroxid (Reinheit >98%, Sigma-Aldrich) |
| KOH | Kaliumhdroxid (Reinheit 85%, Fisher Scientific) |
| K₃PO₄ | Kaliumphosphat (Reinheit >98%, Sigma-Aldrich) |
| Na₂CO₃ | Natriumcarbonat (Reinheit 99,5%, Fisher Scientific) |
| TBAHS | Tetrabutylammoniumhydrogensulfat (Reinheit >99%, Sigma-Aldrich) |

### Beispiel 1

In einem 300 mL Druckautoklaven wird ein Gemisch aus 20 g des nicht vorbehandelten VBW (Maße 25x25x7 mm), 2.55 g des Katalysators Kaliumphosphat (K₃PO₄) und 120 g Wasser werden in einer Stickstoffatmosphäre auf 220 °C erhitzt. Die Temperatur wird für 240 min gehalten, wobei der Druck hierbei p_{max,abs}=34 bar erreicht. Nach Beendung der Reaktion werden die Fasern von der Flüssigphase getrennt, mit Wasser sowie Aceton gewaschen und abschließend unter Vakuum bei 50 °C getrocknet.

### Beispiele 2 - 20

Die Beispiele wurden analog Beispiel 1 durchgeführt, mit jeweils den in der Tabelle angegebenen Katalysatoren, Mengen und Reaktionsbedingungen. In Beispiel 15 wurde statt des glasfaserverstärkten Polyurethan-Polyacrylat-Harz VBW das glasfaserverstärkte Polyurethanharz VBW` eingesetzt.

### Beispiele 21* - 23*

Die Beispiele 21* und 22* enthalten zusätzlich zu dem Katalysator Kaliumphosphat (K₃PO₄) in den in der Tabelle angegebenen Menge weiterhin 5,5 Gew.-% (bezogen auf die Menge des eingewogenen Verbundwerkstoffs) an Tetrabutylammoniumhydrogensulfat (TBAHS). Beispiel 23* enthält 0,25 g TBAHS. Ansonsten wurden diese Beispiele ebenfalls analog zu Beispiel 1 durchgeführt wurde, mit jeweils den in der Tabelle angegebenen Katalysatoren, Mengen und Reaktionsbedingungen.

### Verwendete Abkürzungen, Messungen und Beurteilungen:

m(cat) = eingewogene Masse Katalysator
m(VBW) = eingewogene Menge an Verbundwerkstoff VBW bzw. VBW`
m_{Res}= Masse an Polymermatrix im Reaktionsansatz
n_{(cat)} /m_{(Res)} = molare Menge an Katalysator bezogen auf die Polymermatrix im Reaktionsansatz
T_{R} = Reaktionstemperatur
t_{R} = Reaktionszeit (Beginn der Messung bei Erreichen von T_{R})
delta TGA = Restanhaftungen an organischen Materialien an der Faser, bestimmt via thermogravimetrischer Analyse (Angaben in Gew.-% bezogen auf die Einwaage). Die thermogravimetrische Analyse wurde mit dem Gerät TGA/DSC 3+ von Mettler Toledo durchgeführt und mit dem Programm Mettler Toledo STAR2 ausgewertet. Die Messungen wurden in einem Temperaturbereich von 30 bis 600 °C mit einer Heizrate von 20 °C / min durchgeführt.
GF_{TR} = Gewicht der Glasfaser nach Trocknung geteilt durch das berechnete Gewicht der Glasfaser in der Einwaage (in %)
Q = optische Bewertung der Faserqualität, die folgenden Kriterien wurden zugrunde gelegt:
0 = schlecht, Polymermatrix im Wesentlichen noch auf der Faser vorhanden
1 = medium, Reste von Polymermatrix auf der Faser vorhanden
2 = gut, keine Polymermatrix vorhanden, flexible Faser
3 = medium, keine Polymermatrix vorhanden, Faser leicht spröde
4 = schlecht, keine Polymermatrix vorhanden, Faser sehr spröde / brüchig

**Tabelle 1:**

| **Bsp.** | **Katalysator** | **m(cat) [g]** | **m(H₂O) [g]** | **m(VBW) [g]** | **n_{(cat)} /m_{(Res)} mmol/g** | **T_{R} [°C]** | **t_{R} [min]** | **GF_{TR} [Gew.-%]** | **Q** | **delta TGA [Gew.-%]** |
|---|---|---|---|---|---|---|---|---|---|---|
| 1* | - | - | 22,52 | 2,88 | n.a. | 300 | 240 | 106,3 | 0 | 8,31 |
| 2* | K₃PO₄ | 3,62 | 135,77 | 22,62 | 3,02 | 200 | 240 | 101,5 | 1 | 1,08 |
| 3 | K₃PO₄ | 2,88 | 137,61 | 22,52 | 2,41 | 220 | 240 | 99,3 | 2 | 0,34 |
| 4* | K₃PO₄ | 3,74 | 136,30 | 22,77 | 3,10 | 260 | 240 | 91,6 | 3 | 1,29 |
| 5* | K₃PO₄ | 3,37 | 126,56 | 21,08 | 3,02 | 280 | 240 | 90,2 | 4 | 2,55 |
| 6* | K₃PO₄ | 3,66 | 137,31 | 22,89 | 3,01 | 300 | 240 | 83,5 | 4 | 6,11 |
| 7* | K₃PO₄ | 2,74 | 103,92 | 17,33 | 2,97 | 220 | 120 | 103,1 | 1 | 1,08 |
| 8 | K₃PO₄ | 3,61 | 135,26 | 22,52 | 3,02 | 220 | 360 | 100,2 | 2 | 0,54 |
| 9* | K₃PO₄ | 0,34 | 124,18 | 20,69 | 0,31 | 220 | 240 | 107,7 | 1 | 6,38 |
| 10* | K₃PO₄ | 22,58 | 135,67 | 22,55 | 18,87 | 220 | 240 | 95,6 | 3 | 4,64 |
| 11 | NaOH | 0,61 | 136,20 | 22,70 | 2,67 | 220 | 240 | 96,2 | 2 | 1,04 |

**Tabelle 1 (fortgesetzt):**

| **Bsp.** | **Katalysator** | **m(cat) [g]** | **m(H₂O) [g]** | **m(VBW) [g]** | **n_{(cat)} /m_{(Res}) mmol/g** | **T_{R} [°C]** | **t_{R} [min]** | **GF_{TR} [Gew.-%]** | **Q** | **delta TGA [Gew.-%]** |
|---|---|---|---|---|---|---|---|---|---|---|
| 12* | NaOH | 0,05 | 121,69 | 20,27 | 0,23 | 220 | 240 | 105,4 | 1 | 7,28 |
| 13 | KOH | 0,67 | 118,19 | 19,69 | 2,43 | 220 | 240 | 98,2 | 2 | 0,47 |
| 14 | Na₂CO₃ | 1,45 | 136,89 | 22,73 | 2,40 | 220 | 240 | 99,3 | 2 | 1,1 |
| 15 | K₃PO₄ | 3,41 | 126,87 | 21,15 | 3,04 | 220 | 240 | 100,2 | 2 | 0,4 |
| 16* | K₃PO₄ | 7,08 | 132,62 | 22,10 | 6,03 | 200 | 240 | 109 | 1 | 5,32 |
| 17 | K₃PO₄ | 7,31 | 136,84 | 22,81 | 6,04 | 220 | 240 | 98,2 | 2 | 0,32 |
| 18* | K₃PO₄ | 3,62 | 136,04 | 22,56 | 3,02 | 200 | 300 | 104 | 1 | 1,81 |
| 19 | K₃PO₄ | 3,07 | 114,71 | 19,12 | 3,02 | 240 | 180 | 99,2 | 2 | 0,15 |
| 20 | K₃PO₄ | 3,67 | 136,77 | 22,79 | 3,03 | 240 | 420 | 98,6 | 2 | 1,1 |
| 21 * | K₃PO₄+ TBAHS | 3,69 | 138,22 | 23,02 | 3,02 | 240 | 240 | 98,8 | 2 | 16 |
| 22* | K₃PO₄ + TBAHS | 3,65 | 136,52 | 22,76 | 3,02 | 200 | 240 | 104,8 | 0 | 6,6 |
| 23* | K₃PO₄ TBAHS | 56,48 | 110,85 | 18,46 | 57,65 | 150 | 900 | >100 | 1 | 2,6 |

## Patentansprüche

1. Verfahren zur Wiedergewinnung von Fasern aus einem faserverstärkten Polyurethan-basierten Verbundwerkstoff , umfassend die Schritte:
(A) Vorlegen einer Reaktionsmischung enthaltend einen Verbundwerkstoff aus einem Polyurethanharz und Fasern, Wasser und einem Katalysator ausgewählt aus der Gruppe enthaltend Hydroxide, Carbonate, Hydrogencarbonate, Phosphate, Hydrogenphosphate, Carboxylate und Alkoholate von Alkali - oder Erdalkalimetallen sowie Mischungen dieser Verbindungen,
(B) Hydrolyse der Reaktionsmischung unter Auflösung des Polyurethanharzes,
(C) Abtrennung der Fasern durch Filtration und Waschung,
**dadurch gekennzeichnet, dass**
der Katalysator in einer Menge von 3 - 50 mmol / g bezogen auf die Menge an eingesetztem Polyurethanharz (Verbundwerkstoff ohne Faser) eingesetzt wird,
und die Hydrolyse für > 150 min. und bei einer Temperatur im Bereich von 205°C bis 245°C durchgeführt wird.

2. Verfahren nach Anspruch 1, **dadurch gekennzeichnet, dass** Schritt (B) bei einem Druck von 1 - 100 bar durchgeführt wird.

3. Verfahren nach Anspruch 1 oder 2, **dadurch gekennzeichnet, dass** der Katalysator in einer Menge von 5 - 40 mmol / g, bevorzugt von 7 - 20 mmol / g eingesetzt wird.

4. Verfahren nach Anspruch 1, 2 oder 3, **dadurch gekennzeichnet, dass** die Hydrolyse für > 200 min. durchgeführt wird.

5. Verfahren nach Anspruch 4, dass die Hydrolyse bei einer Temperatur im Bereich von 205 °C bis 235 °C, besonders bevorzugt von 210 °C bis 230 °C durchgeführt wird.

6. Verfahren nach Anspruch 1, 2 oder 3, **dadurch gekennzeichnet, dass** die Hydrolyse für > 150 min. und < 360 min bei 235 °C bis 245 °C durchgeführt wird.

7. Verfahren nach einem der Ansprüche 1 bis 6, **dadurch gekennzeichnet, dass** die Hydrolyse in einem Druckreaktor bei autogenem Druck durchgeführt wird.

8. Verfahren nach einem der Ansprüche 1 bis 7, **dadurch gekennzeichnet, dass** es sich bei dem Polyurethanharz um ein Polyurethanpolymer oder ein Polyurethan - Polyacrylat - Hybridpolymer handelt.

9. Verfahren nach einem der Ansprüche 1 bis 8, **dadurch gekennzeichnet, dass** es sich bei dem Polyurethanharz um Polyurethane und / oder Polyurethan-Poly(meth)acrylate hergestellt mit einer Kennzahl von 80 - 150, insbesondere bevorzugt von 80 - 120 handelt.

10. Verfahren nach einem der Ansprüche 1 bis 9, **dadurch gekennzeichnet, dass** es sich bei dem Katalysator um Kaliumphosphat, Natriumcarbonat, Kaliumhydroxid und / oder Natriumhydroxid, bevorzugt um Kaliumphosphat handelt.

11. Verfahren nach einem der Ansprüche 1 bis 10, **dadurch gekennzeichnet, dass** Schritt (B) in Abwesenheit von einer oder mehreren Verbindungen ausgewählt aus (i) quartäre Ammoniumsalze enthaltend ein Ammonium-Kation umfassend 6 oder mehr Kohlenstoffatome, (ii) organische Sulfonate umfassend 7 oder mehr Kohlenstoffatome, durchgeführt wird.

12. Verfahren nach einem der Ansprüche 1 bis 11, **dadurch gekennzeichnet, dass** es sich bei dem Verbundwerkstoff um ein Teil von End-of-Life-Produkten handelt, die aus Windgeneratorblättern, Windgeneratorgondelgehäusen, Propellerblättern von Wasserfahrzeugen, Rümpfen, dekorativen Teilen für den Innen- und Außenbereich von Automobilen, Automobilkarosserien, Radomen, Maschinenstrukturteilen, dekorativen Teilen und Strukturelementen für Architekturen und Brücken ausgewählt sind.

13. Fasern hergestellt durch ein Verfahren gemäß einem der Ansprüche 1- 12.

14. Verwendung der Fasern wiedergewonnen durch ein Verfahren gemäß einem der Ansprüche 1- 12 für die Herstellung von Faserverbundwerkstoffen oder für die Herstellung von neuen Fasern durch Einschmelzen.

15. Faserverbundwerkstoff, hergestellt unter Verwendung der wiedergewonnenen oder neu hergestellten Fasern gemäß Anspruch 14.
